# EUROPEAN PATENT APPLICATION

(11) **EP 1 359 503 A1**
(43) Date of publication of application: **05.11.2003**
(21) Application number: 02009865.3
(22) Date of filing: 02.05.2002
(51) Int. Cl.: G06F 9/44

(54) **Providing code for prototype page for subsequent presentations**

(71) Applicant: SAP Aktiengesellschaft, 69190 Walldorf (DE)
(72) Inventor: Arend, Udo, 69126 Heidelberg (DE); Baumgart, Jens, 69168 Wiesloch (DE); Goerke, Björn, 69242 Mühlhausen (DE)

(57) **Abstract**

A design environment automatically provides prototype code for a prototype presentation where pictures corresponds to objects in a final presentation. The environment interacts with a designer through design presentations (501-504) to (a) receive a distribution selection of areas (501, 510, 520), (b) receive a placement of icon symbols (503, 521, 522), wherein the symbols correspond to the pictures, (c) to receive navigation through symbols (504, 550, 551) that graphically link icon symbols in correspondence to consecutive presentation of pictures. While evaluating the received information, the environment provides prototype code in markup language for immediately presenting pictures corresponding to the final presentation in area and in sequence.

## Description

### Field of the Invention

The present invention generally relates to data processing and, more particularly, relates to computer systems, computer programs, and methods that provide pages in markup language for presentation by a browser.

### Background of the Invention

Computer program development often involves to provide a model of the program tasks, especially a user interface model.

Simplified, a first person - the designer (or "developer") - uses the model to design the program at design time; a second person - the user - later uses the program at use time.

The program interacts with the user through presentations on an output device. Taking a computer screen as an example, the presentations have windows, icons, menus, buttons, tool bars or the like.

The presentations inform the user (e.g., by icons) and receive control commands from the user (e.g., from buttons).

The user has requirements, for example, relating to:
- layout structure of the presentations,
- navigation between presentations according to predefined sequences, and
- availability of program functions.

The designer should take user-requirements into account. Simulating the program by prototypes at design time is convenient. A third person - the tester - operates a prototype that corresponds to the above requirements. In comparison to the program, the prototype has a reduced functionality.

However, providing the prototype requires the designer to have programming skills; providing the final program requires rewriting. There is a technical task to automate prototype and program providing.

### Prior Art

The following references are useful:
- US 5,995,099
- Michael Kisker: "UML basierte Spezifikation von Benutzerschnittstellen" Diploma Thesis. University of Paderborn, Paderborn, Germany 2001 (http://www.uni-paderborn.de/cs/ag-schaefer/-Veroeffentlichungen/Quellen/Diplom/2001/-DiplomMKisker.pdf)
- Philippe Kruchten: "The 4+1 View Model of Architecture", in IEEE Software, November 1995, 12 (6), pp.42-50 (available from http://www.-rational.com/media/whitepapers/Pbk4pl.pdf)
- Hugh Beyer, Karen Holtzblatt: "Contextual design: defining customer-centered systems". Morgan Kaufmann Publishers, San Francisco 1998, Part 6 "Prototyping".

### Summary of the Invention

The invention relates to a method to provide code for a prototype page for subsequent first and second presentations by a browser on a test computer. The method comprises: selecting a distribution of presentation areas, placing first and second icon symbols for user activities in at least one presentation area, wherein the user activities are related to the first and second presentations, placing a navigation symbol that graphically links the first and second icon symbols to indicate the subsequent presentations, providing markup language code for the prototype page with location indicating code corresponding to the area distribution, picture code for first and second pictures, the pictures corresponding to the icon symbols, the picture code being combined with the location code, interaction code corresponding to the navigation symbol for presenting the first picture prior to the second picture.

Preferably, the method is performed on a design computer operated by a designer. Preferably, the steps selecting, placing icon symbols, and placing navigation symbols are performed in interaction with the designer. Preferably, selecting an area division comprises to present graphical symbols of predefined area divisions to the designer and to receive a selection from the designer. Preferably, placing first and second icon symbols comprises to place the icon symbols into separate areas. Preferably, wherein placing first and second icon symbols comprises to place the icon symbols into a common area. Preferably, prior to placing symbols, areas are presented with area borders. Preferably, the first icon symbol stands for interaction, and the navigation symbol points from the first symbol into the direction of the second icon symbol. Preferably, the navigation symbol is an arrow with its origin at the first icon symbol. Preferably, in step providing markup language code, code is provided in a language selected from the group of: hyper text markup language (HTML), extensible markup language (XML), extensible hyper text markup language (XHTML), wireless application markup language (WML), Standard Generalized Markup Language (SGML), and Java, JavaScript. Preferably, in step providing markup language code, code is initially provided in XML and subsequently converted into HTML. Preferably, in step providing markup language code, code is provided according to predefined symbol-to-code conversion rules. The invention also relates to an article of manufacture comprising a computer usable medium having computer readable program code means embodied therein for causing a computer to perform the method.

The invention also relates to a computer program product having computer instructions that cause a design computer that interacts with a de signer to provide a prototype page for subsequent first and second presentations. The computer program product comprises: instructions for selecting a distribution of presentation areas, instructions for placing first and second icon symbols for user activities in at least one presentation area, wherein the user activities are related to the first and second presentations, instructions for placing a navigation symbol that graphically links the first and second icon symbols to indicate the subsequent presentations, instructions for providing markup language code for the prototype page with location indicating code corresponding to the area distribution, picture code for first and second pictures, the pictures corresponding to the icon symbols, the picture code being combined with the location code, interaction code corresponding to the navigation symbol for presenting the first picture prior to the second picture.

Preferably, the instructions for selecting an area division cause the computer to present graphical symbols of predefined area divisions to the designer and to receive a selection from the designer. Preferably, the instructions for placing first and second icon symbols cause the computer to place the icon symbols into separate areas. Preferably, the instructions for placing first and second icon symbols cause the computer to place the icon symbols into a common area. Preferably, the instructions for providing markup language code cause the computer to provide code in HTML, XML, XHTML, WML, SGML, Java, or JavaScript.

The invention also relates to a computer to provide code for a prototype page for subsequent first and second presentations by a browser on a test computer. The computer comprises: means for selecting a distribution of presentation areas, means for placing first and second icon symbols for user activities in at least one presentation area, wherein the user activities are related to the first and second presentations, means for placing a navigation symbol that graphically links the first and second icon symbols to indicate the subsequent presentations, means for providing markup language code for the prototype page with location indicating code corresponding to the area distribution, picture code for first and second pictures, the pictures corresponding to the icon symbols, the picture code being combined with the location code, interaction code corresponding to the navigation symbol for presenting the first picture prior to the second picture.

Preferably, the means for selecting, placing icon symbols, and placing navigation symbols are implemented by computer program instructions that cause the computer to interact with a designer being the user of the computer. Preferably, the means for selecting an area division presents graphical symbols of predefined area divisions to the designer and receives a selection from the designer. Preferably, the means for placing first and second icon symbols place the icon symbols into separate areas. Preferably, the means for placing first and second icon symbols place the icon symbols into a common area. Preferably, the first icon symbol stands for interaction, and the navigation symbol points from the first symbol into the direction of the second icon symbol. Preferably, the means for providing markup language code provide code in HTML, XML, XHTML, WML, SGML, Java, or JavaScript.

### Brief Description of the Drawings

- FIG. 1: illustrates a simplified block diagram of a computer system;
- FIG. 2: illustrates an overview about computers and persons;
- FIG. 3: illustrates an introduction into naming conventions for presentations;
- FIG. 4: illustrates a simplified flow chart diagram of a method of the present invention;
- FIG. 5: illustrates area distribution of presentations;
- FIG. 6: illustrates an overview about consecutive design presentations during method performance;
- FIG. 7: illustrates an overview about code in a markup language page;
- FIG. 8: illustrates consecutive prototype presentations; and
- F. 9-12: illustrate consecutive use presentations.

### Computer System

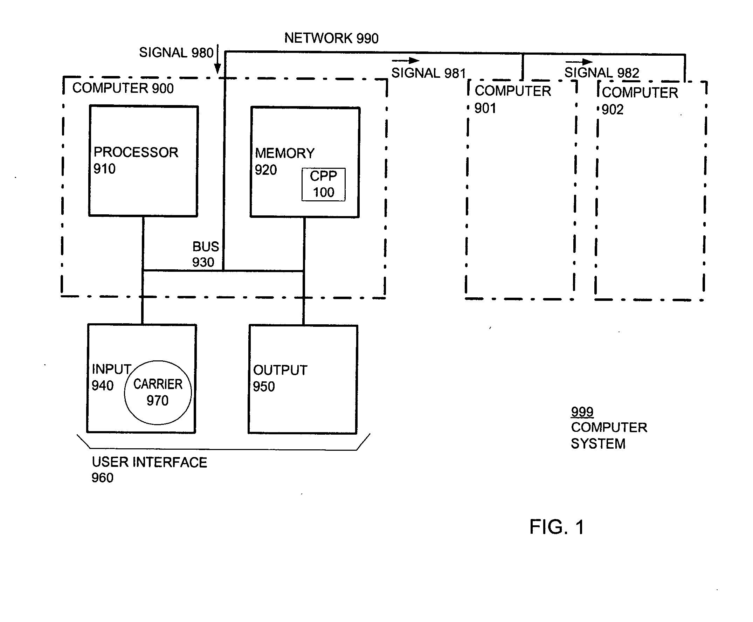

FIG. 1 illustrates a simplified block diagram of the inventive computer network system 999 having a plurality of computers 900, 901, 902 (or 90q, with q=0...Q-1, Q any number).

Computers 900-902 are coupled via inter-computer network 990. Computer 900 comprises processor 910, memory 920, bus 930, and, optionally, input device 940 and output device 950 (I/O devices, user interface 960). As illustrated, the invention is present by computer program product 100 (CPP), program carrier 970 and program signal 980, collectively "program".

In respect to computer 900, computer 901/902 is sometimes referred to as "remote computer", computer 901/902 is, for example, a server, a router, a peer device or other common network node, and typically comprises many or all of the elements described relative to computer 900. Hence, elements 100 and 910-980 in computer 900 collectively illustrate also corresponding elements 10q and 91q-98q (shown for q=0) in computers 90q.

Computer 900 is, for example, a conventional personal computer (PC), a desktop and hand-held device, a multiprocessor computer, a pen computer, a microprocessor-based or programmable consumer electronics, a minicomputer, a mainframe computer, a personal mobile computing device, a mobile phone, a portable or stationary personal computer, a palmtop computer or the like.

Processor 910 is, for example, a central processing unit (CPU), a micro-controller unit (MCU), digital signal processor (DSP), or the like.

Memory 920 symbolizes elements that temporarily or permanently store data and instructions. Although memory 920 is conveniently illustrated as part of computer 900, memory function can also be implemented in network 990, in computers 901/902 and in processor 910 itself (e.g., cache, register), or elsewhere. Memory 920 can be a read only memory (ROM), a random access memory (RAM), or a memory with other access options. Memory 920 is physically implemented by computer-readable media, such as, for example: (a) magnetic media, like a hard disk, a floppy disk, or other magnetic disk, a tape, a cassette tape; (b) optical media, like optical disk (CD-ROM, digital versatile disk - DVD); (c) semiconductor media, like DRAM, SRAM, EPROM, EEPROM, memory stick, or by any other media, like paper.

Optionally, memory 920 is distributed across different media. Portions of memory 920 can be removable or non-removable. For reading from media and for writing in media, computer 900 uses devices well known in the art such as, for example, disk drives, tape drives.

Memory 920 stores support modules such as, for example, a basic input output system (BIOS), an operating system (OS), a program library, a compiler, an interpreter, and a text- processing tool. Support modules are commercially available and can be installed on computer 900 by those of skill in the art. For simplicity, these modules are not illustrated.

CPP 100 comprises program instructions and - optionally - data that cause processor 910 to execute method steps of the present invention. Method steps are explained with more detail below. In other words, CPP 100 defines the operation of computer 900 and its interaction in network system 999. For example and without the intention to be limiting, CPP 100 can be available as source code in any programming language, and as object code ("binary code") in a compiled form. Persons of skill in the art can use CPP 100 in connection with any of the above support modules (e.g., compiler, interpreter, operating system).

Although CPP 100 is illustrated as being stored in memory 920, CPP 100 can be located elsewhere. CPP 100 can also be embodied in carrier 970.

Carrier 970 is illustrated outside computer 900. For communicating CPP 100 to computer 900, carrier 970 is conveniently inserted into input device 940. Carrier 970 is implemented as any computer readable medium, such as a medium largely explained above (cf. memory 920). Generally, carrier 970 is an article of manufacture comprising a computer readable medium having computer readable program code means embodied therein for executing the method of the present invention. Further, program signal 980 can also embody computer program 100. Signal 980 travels on network 990 to computer 900. Having described CPP 100, program carrier 970, and program signal 980 in connection with computer 900 is convenient. Optionally, program carrier 971/972 (not shown) and program signal 981/982 embody computer program product (CPP) 101/102 to be executed by processor 911/912 (not shown) in computers 901/902, respectively.

Input device 940 symbolizes a device that provides data and instructions for processing by computer 900. For example, device 940 is a keyboard, a pointing device (e.g., mouse, trackball, cursor direction keys), microphone, joystick, game pad, scanner, disk drive. Although the examples are devices with human interaction, device 940 can also operate without human interaction, such as, a wireless receiver (e.g., with satellite dish or terrestrial antenna), a sensor (e.g., a thermometer), a counter (e.g., goods counter in a factory). Input device 940 can serve to read carrier 970.

Output device 950 symbolizes a device that presents instructions and data that have been processed. For example, a monitor or a display, (cathode ray tube (CRT), flat panel display, liquid crystal display (LCD), speaker, printer, plotter, vibration alert device. Similar as above, output device 950 communicates with the user, but it can also communicate with further computers.

Input device 940 and output device 950 can be combined to a single device; any device 940 and 950 can be provided optional.

Bus 930 and network 990 provide logical and physical connections by conveying instruction and data signals. While connections inside computer 900 are conveniently referred to as "bus 930", connections between computers 900-902 are referred to as "network 990". Optionally, network 990 comprises gateways being computers that specialize in data transmission and protocol conversion. Devices 940 and 950 are coupled to computer 900 by bus 930 (as illustrated) or by network 990 (optional). While the signals inside computer 900 are mostly electrical signals, the signals in network are electrical, magnetic, optical or wireless (radio) signals. Networking environments (as network 990) are commonplace in offices, enterprise-wide computer networks, intranets and the internet (i.e. world wide web). The physical distance between a remote computer and computer 900 is not important. Network 990 can be a wired or a wireless network. To name a few network implementations, network 990 is, for example, a local area network (LAN), a wide area network (WAN), a public switched telephone network (PSTN); a Integrated Services Digital Network (ISDN), an infra-red (IR) link, a radio link, like Universal Mobile Telecommunications System (UMTS), Global System for Mobile Communication (GSM), Code Division Multiple Access (CDMA), or satellite link.

Transmission protocols and data formats are known, for example, as transmission control protocol/internet protocol (TCP/IP), hyper text transfer protocol (HTTP), secure HTTP, wireless application protocol, unique resource locator (URL), a unique resource identifier (URI), hyper text markup language HTML, extensible markup language (XML), extensible hyper text markup language (XHTML), wireless application markup language (WML), Standard Generalized Markup Language (SGML) etc. Interfaces coupled between the elements are also well known in the art. For simplicity, interfaces are not illustrated. An interface can be, for example, a serial port interface, a parallel port interface, a game port, a universal serial bus (USB) interface, an internal or external modem, a video adapter, or a sound card. Computer and program are closely related. As used hereinafter, phrases, such as "the computer provides" and "the program provides", are convenient abbreviation to express actions by a computer that is controlled by a program.

### Detailed Description of a Preferred Embodiment

The technical task is solved by a method to provide code for a prototype page for subsequent first and second presentations by a browser on a test computer. The method takes advantage of the fact that both the prototype presentation and the final use presentation is provided by a browser. The method comprises:
selecting a distribution of presentation areas, placing first and second icon symbols for user activities in at least one presentation area, wherein the user activities are related to the first and second presentations, placing a navigation symbol that graphically links the first and second icon symbols to indicate the subsequent presentations,
providing markup language code for the prototype page with location indicating code corresponding to the area distribution, picture code for first and second pictures, the pictures corresponding to the icon symbols, the picture code being combined with the location code, interaction code corresponding to the navigation symbol for presenting the first picture prior to the second picture.

Since providing code for the prototype page is automated, testing can follow immediately after designing. Iterations of design and test steps are possible. Redesigning is enabled. The designer uses graphics; programming skills at the page writing level are not required.

Testing involves - static - to roughly check a distribution of screen areas, - dynamic - to check the sequence of presentations under conditions as expected for the use page. Markup language code for the prototype page and can be converted to markup code for the final use page by using standard development tools.

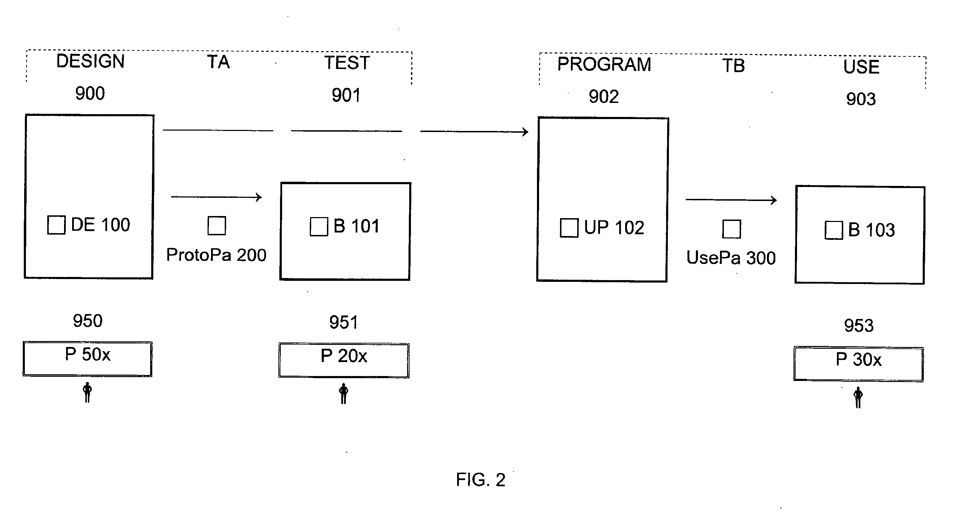

FIG. 2 illustrates an overview about computers and persons in a preferred embodiment of the present invention.

As illustrated from left to right, computers and PERSONS are classified into
- design computer 900 in interaction with the DESIGNER,
- test computer 901 in interaction with the TESTER,
- program computer 902 in automatic operation, and
- use computer 903 in interaction with the USER.
   Time periods are classified into (cf. dashed lines)
- design and prototype-test time TA, and
- program and use time TB.
   Computer programs 100-103 and pages 200, 300 (square symbols) to control the processors of computers 900-903 are classified into
- design environment (DE, "application modeler" or "framework") 100 on computer 900 interacting with the DESIGNER to provide prototype page (ProtoPa) 200 according to the present invention, to forward page 200 to computer 901, (during time TA, cf. arrow symbol), and to forward use program (UP) 102 to computer 902 prior to time TB,
- browser (B) 101 on test computer 901 to interpret prototype page 200, interacting with the TESTER, for example, via keyboard or mouse,
- use program (UP) 102 on program computer 902 to provide use page (UsePa) 300 during program/use time in cooperation with application and database, and
- browser (B) 103 on use computer 903 to interpret use page 300, interacting with the USER.

Browsers 101 and 103 are commercially available browsers.

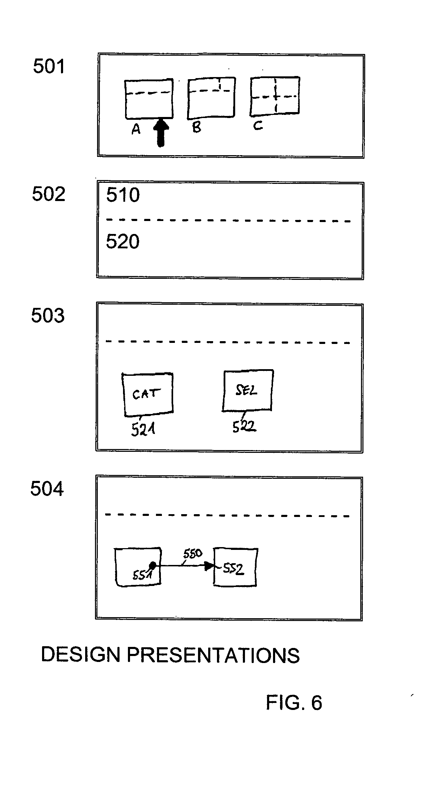

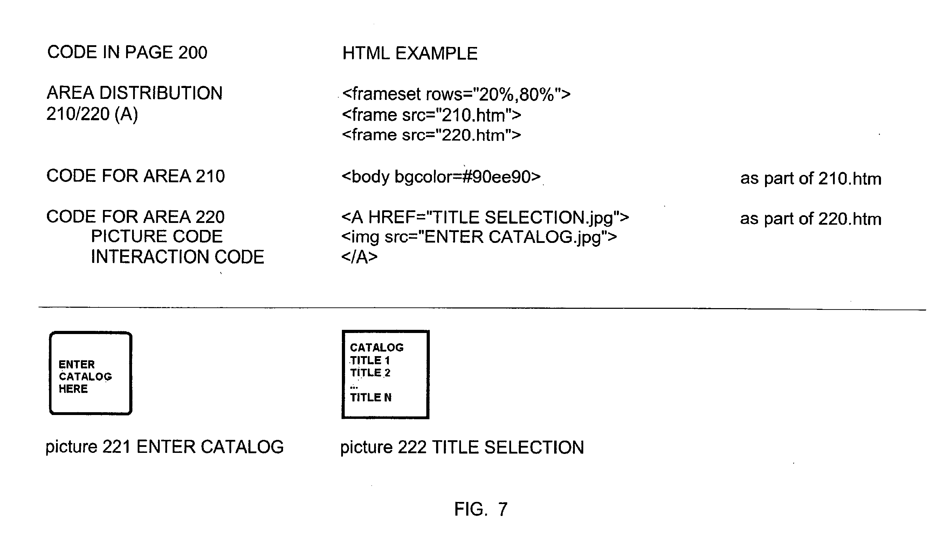

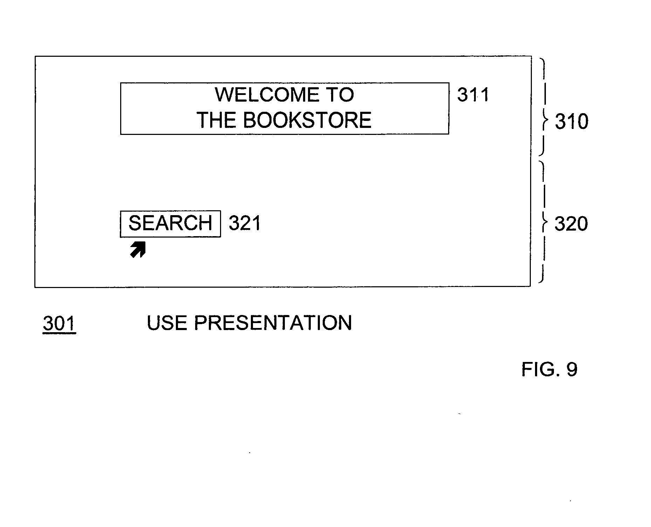

Presentations on screens 950, 951, 953 (double-line frames) are classified into
- design presentations 50x on computer 900 (cf. FIG. 6),
- prototype presentations 20x on computer 901 (cf. FIGS. 7-8),
- use presentations 30x on use computer 903 (cf. FIGS. 9-12).

For the presentations, letter "x" stands for 1-4 and indicates a presentation sequence.

Technically, prototype presentations 20x on computer 901 are controlled by page 200, use presentations 30x are controlled by page 300. Optionally, computers 901 and 903 request page updates from computers 900 and 902, respectively. Requesting is well-known in the art and useful, for example, to search in an application database (catalog). The term "page" is collectively used for page updates and pages that are linked to the original page.

Although the computers are illustrated as separate units with different functions, the present invention can be implemented by a difference number of computers. For example, design computer 900 and test computer 901 can be physically the same machine.

While interpreting page 300, use computer 903 is the client of program computer 902; while interpreting 200, test computer 901 is optionally the client of program computer 902. During testing, the client/server relation of computers 901/900 is not required; stand-alone testing on computer 901 is convenient.

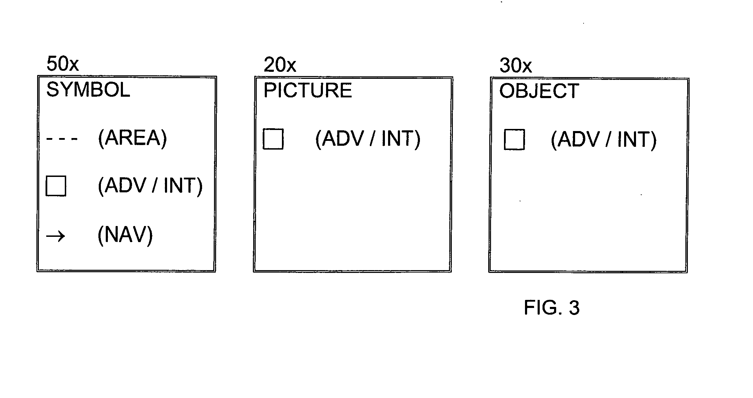

FIG. 3 illustrates an introduction into naming conventions for presentations 50x, 20x and 30x. Symbols in design presentations 50x correspond to pictures in prototype presentations 20x and to objects in use presentations 30x.

Symbols are:
- area border symbols (e.g., dashed lines),
- icon symbols for advice (ADV) and interaction (INT),
- navigation symbols (NAV, e.g., arrows).

Pictures and objects serve for advice (ADV) and interaction (INT). By being interactive, some pictures and objects serve for navigation.

Using above PERSON distinction, the DESIGNER sees symbols, the TESTER sees pictures, and the USER sees objects.

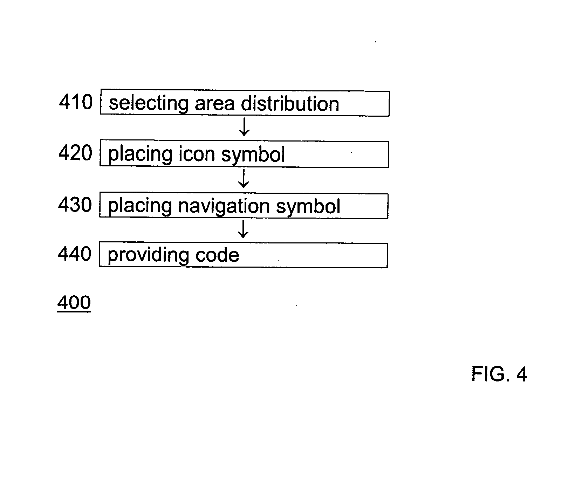

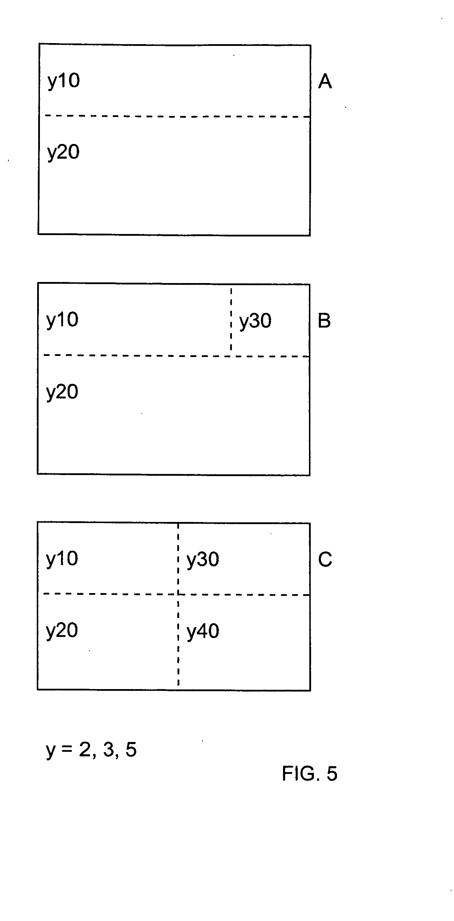

FIG. 4 illustrates a simplified flow chart diagram of method 400 of the present invention. Method 400 to provide code of prototype page 200 is performed by design computer 900 and comprises the following steps:
- selecting area distribution (cf. FIGS. 5-6),
- placing icon symbols in at least one presentation area (cf. FIG. 6),
- placing navigation symbols into the area (cf. FIG. 6), and
- providing markup language code (cf. FIG. 7). Details for method 400 are explained in connection with the following figures. By selecting areas and placing symbols, the DESIGNER assigns objects to areas (location) and assigns objects to actions (navigation). This assignment remains valid also for the prototype.

FIG. 5 illustrates area distribution. Areas y10, y20, y30 or y40 (or "tiles", y = 5, 2, 3) divide presentations 500, 200 or 300. For convenience, area borders are illustrated by dashed lines. Exemplary distribution types are type A, type B and type C ("pattern"). Letter "y" stands for 5 (presentation 50x screen 950), for 2 (presentation 20x on screen 951) and for 3 (presentation 30x on screen 953).

Areas are convenient to organize the presentation. Areas at the top (e.g., area y10, y30) conveniently serve as orientation guide for DESIGNER/TESTER/USER; areas at the bottom conveniently serve to indicate a status.

Persons of skill in the art are able to:
- add or remove areas,
- shape the areas differently (e.g. circles, landscapes),
- add or remove area borders,
- apply areas only to predefined screen portions.

FIGS. 6-12 illustrates simplified design, test and use presentations in the example of an Internet book shop. It is intended that computer 902 operates a bookstore application, for example, implemented by business software R/3 that is commercially available from SAP Aktiengesellschaft Walldorf (Baden), Germany. The application cooperates with a database that stores a book catalog. Program 102 on computer 902 connects the application and the Internet.

FIG. 6 illustrates an overview about consecutive design presentations 501-504 (double-line frames) while performing method 400. The DESIGNER operates design computer 900 with design environment 100; in other words, method steps 410, 420 and 430 are performed in interaction with the DESIGNER.

As in presentation 501, the DESIGNER selects distribution A (arrow standing for cursor, cf. step 410) of screen area 510/520 by selecting graphical symbols of predefined area distribution types A, B and C (cf. FIG. 6).

As in presentation 502, selected area distribution 510/520 (type A) is presented on full screen. Presenting areas 510/520 with borders (dashed line) is convenient. As in presentation 503, the DESIGNER places icon symbol 521 for user activity CAT (e.g., start searching in book catalog; cf. step 420). Also, the DESIGNER places icon symbol 522 for user activity SEL (e.g., selecting a book) into area 520.

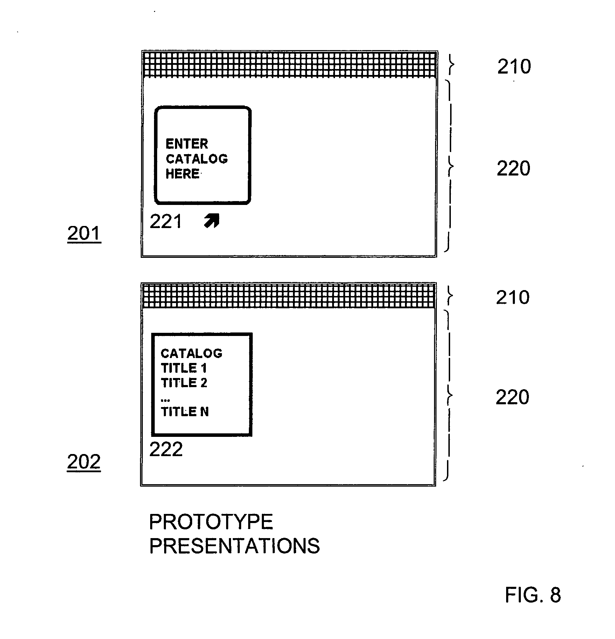

Icon symbols 521 and 522 are related to corresponding pictures 221 and 222 in prototype presentations 201 and 202, respectively (cf. FIG. 8) and related to objects 321 and 322 in use presentations 301 and 302, respectively (cf. FIGS. 9-10).

Placing symbols 521 and 522 into common area 520 means that the corresponding pictures 221 and 222 as well as corresponding objects 321 and 322 appear in that common area 220/320 (cf. FIGS. 8-10).

As in presentation 504, the DESIGNER places navigation symbol 550 (cf. step 430). Convenient for symbol 550 is an arrow with head 552 pointing to icon 522. Symbol 550 graphically links icon symbols 521 and 522 to indicate that corresponding objects will be presented subsequently.

As in presentation 504, symbol 550 has a further function. Arrow symbol 550 has origin 551 (e.g., dot) that the DESIGNER has placed at icon symbol 521. By placing origin 551 over symbol 521; the DESIGNER indicates to make the corresponding object (i.e. object 321) interactive.

Presentation 504 can be considered as a state diagram (for the use presentation). Placing origin 551 in interactive function enhances the known User Environment Design (UED) diagram (cf. Beyer/Holtzblatt reference, figures 14.4 and 14.5).

FIG. 7 illustrates an overview about code in page 200 to provide prototype presentations 201 and 202 (cf. FIG. 8). Preferably, code is provided in a language that is hyper text markup language (HTML), extensible markup language (XML), extensible hyper text markup language (XHTML), wireless application markup language (WML), and Standard Generalized Markup Language (SGML), Java, JavaScript or a any combination thereof. Convenient is initially providing code in XML and subsequently converting the code into HTML.

Using predefined symbol-to-code conversion rules, the example code converts distribution and placement information (cf. steps 410-430) into HTML.

Location indicating code corresponds to the area distribution (A), for example, by using framesets for areas 210 and 220. The 20/80 per cent division is exemplary and could be determined in step selecting 410. First and second picture code is, for example, the identification of picture files (e.g., *.jpg, *.gif) that technically represent first icon symbol 521 ("CAT", picture 221 "ENTER CATALOG") and second icon symbol 522 ("SEL", picture 222 "TITLE SELECTION"). Picture code is combined with location code, in the example, by including the code into frame "220.htm".

Interaction code corresponds to navigation symbol 550 for presenting first picture 221 prior to second picture 222. In the example, picture 221 is the hyperlink to picture 222.
Optionally is code for frame 210 (e.g., color coding).

FIG. 8 illustrates prototype presentations 201/202 by test computer 901. Browser 101 interprets page 200 (e.g., code of FIG. 7) to consecutively display presentations 201 and 202. Areas 210 and 220 are conveniently distinguished by color. Picture 221 is interactive. The TESTER operates the mouse (arrow symbol) to navigate to picture 222.
Consecutive presentations 201/202 are the dynamic equivalent to the - in view of navigation - static presentation 504 (designed by the DESIGNER).

As mentioned, prototype page 200 is converted to use page 300 by adding more details (e.g., title, status bars, toolbars, buttons, fields, radio buttons, checkboxes, drop down list boxes, tables, trees, charts or the like).

FIGS. 9-12 illustrate use presentations 30x for an extended bookstore example (screen 953, use computer 903). Advice objects 311-314 are added to area 310. In area 320, objects 321 and 322 have been mentioned above; objects 323AB and 324 are added.
Objects are classified into advice objects that inform the USER (e.g., status fields) and interaction objects by that the USER navigates and inputs data (e.g., buttons and input fields). This distinction is however not essential for the present invention.
The figures show how the USER navigates during program/use time TB /cf. FIG. 2). Presentations 301-304 are illustrated by double-line frames. Bold arrows (right up) symbolize a pointing device (e.g. mouse cursor).
Within first area 310, advice objects 311-314 instruct the USER (e.g., "WELCOME ..."); within second area 320, interaction objects 321-324 invite the USER to navigate (e.g., "SEARCH").

FIG. 9 illustrate the first interaction "OPEN CATALOG" by first use presentation 301.
The USER (computer 903) has navigated to the bookstores homepage (e.g., network address of computer 902).
Presentation 301 has advice object 311 "WELCOME..." as headline, interaction object 321 "SEARCH" to call a catalog function. The USER selects the catalog by pointing to object 321.

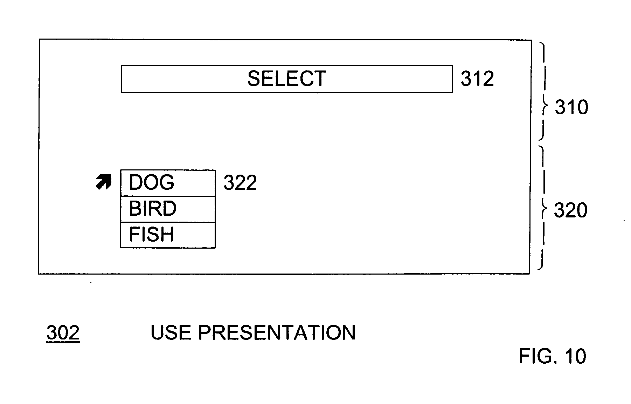

FIG. 10 illustrates a second interaction by second use presentation 302. Advice object 312 "SELECT" replaces object 311, and interaction object 322 replaces object 321. This corresponds to the scenario described in connection with FIGS. 6-8.
When interacting with object 322, the USER selects the book DOG from the catalog (e.g., DOG, BIRD, FISH).

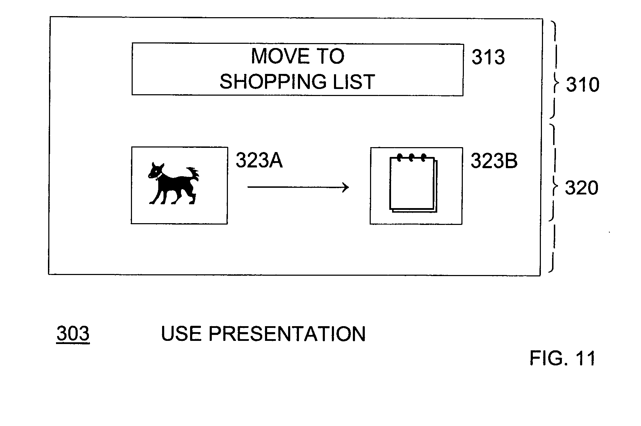

FIG. 11 illustrates a third interaction by third use presentation 303. Advice object 313 "MOVE TO SHOPPING LIST" replaces object 312, and interaction objects 323AB replace object 322. Objects 323A is an icon of the book DOG and object 323B is a shopping list (alternatively, a shopping basket). When interacting, with objects 323AB, the USER drags object 323A (book) over object 323B (list).

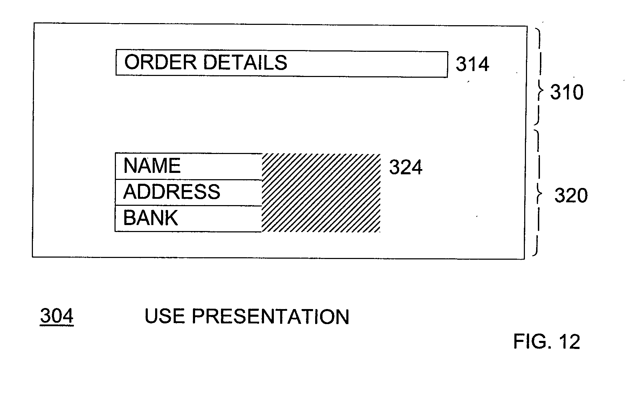

FIG. 12 illustrates a fourth interaction by fourth use presentation 304. Advice object 314 "ORDER DETAILS" replaces object 313, and interaction object 324 replaces objects 323AB. Object 324 is a table with input fields (hatched) that invites the USER to input name, post address, bank information and the like.

The following describes optional embodiments of the invention.
Navigation symbols (in the design presentation) can have attributes so that differently looking symbols distinguish difference actions (in the use presentation).
Navigation symbols can indicate default settings; for example, dashed frames can correspond to pictures and objects that are shown first.
Concerning the object-to-area assignment, advice objects are optionally assigned to areas in top position (e.g., area 210), and interactive objects are optionally assigned to areas where the USER operates use computer 903.
In design presentation, pictures can be simplified by replacing pictures by text strings. For example, to present "pictures" for advice objects 311-314 with texts like "WELCOME ...", code in page 200 is simplified to text strings.
Pictures files can stand for a variety of interactive elements, tables, help function, tree symbols and the like.

### References

- 100: design environment (DE)
- 101: browser (B)
- 102: use program (UP)
- 103: browser (B)
- 200: prototype page (ProtoPa)
- 20x: presentations (P)
- 210/220: area distribution
- 221,222: pictures
- 300: use page (UsePa)
- 30x: use presentations (P)
- 311-314: advice objects
- 321-324: interaction objects
- 400: method
- 410-440: method steps
- 50x: design presentations (P)
- 510/520: area distribution
- 521,522: icon symbols
- 550: navigation symbol
- 551: origin
- 552: head
- 900: design computer
- 901: test computer
- 902: program computer
- 903: use computer
- 950: screen of computer 900
- 951: screen of computer 901
- 953: screen of computer 903
- TA: design/test time
- TB: program/use time
- y10, y20: areas in presentations

## Claims

1. Method (400) to provide code for a prototype page (200) for subsequent first and second presentations (201, 202) by a browser on a test computer (901), the method (400) comprising:
selecting (410) a distribution (A) of presentation areas (510, 520),
placing (420) first (521) and second (522) icon symbols for user activities (CAT, SEL) in at least one presentation area (520), wherein the user activities are related to the first and second presentations (201, 202),
placing (430) a navigation symbol (550) that graphically links the first (521) and second (522) icon symbols to indicate the subsequent presentations (201, 202), providing (440) markup language code for the prototype page (200) with
• location indicating code corresponding to the area distribution (A),
• picture code for first (221) and second (222) pictures, the pictures corresponding to the icon symbols, the picture code being combined with the location code,
• interaction code corresponding to the navigation symbol (550) for presenting the first picture prior to the second picture.

2. The method of claim 1, being performed on a design computer (900) operated by a designer.

3. The method of claim 2, wherein the steps selecting (410), placing (420) icon symbols, and placing (430) navigation symbols are performed in interaction with the designer.

4. The method (400) of claim 1, wherein selecting (410) an area division comprises to present graphical symbols of predefined area divisions (A, B, C) to the designer and to receive a selection from the designer.

5. The method (400) of claim 1, wherein placing (420) first (521) and second (522) icon symbols comprises to place the icon symbols into separate areas.

6. The method (400) of claim 1, wherein placing (420) first (521) and second (522) icon symbols comprises to place the icon symbols into a common area.

7. The method (400) of claim 1, wherein prior to placing symbols, areas (510, 530) are presented with area borders.

8. The method (400) of claim 1, wherein the first icon symbol (521) stands for interaction, and the navigation symbol (550) points from the first symbol (521) into the direction of the second icon symbol (522).

9. The method (400) of claim 8, wherein the navigation symbol (550) is an arrow (550) with its origin (551) at the first icon symbol (521).

10. The method (400) of claim 1, wherein in step providing (440) markup language code, code is provided in a language selected from the group of:
• hyper text markup language (HTML),
• extensible markup language (XML),
• extensible hyper text markup language (XHTML),
• wireless application markup language (WML),
• Standard Generalized Markup Language (SGML), and
• Java, JavaScript.

11. The method (400) of claim 10, wherein in step providing (440) markup language code, code is initially provided in XML and subsequently converted into HTML.

12. The method (400) of claim 1, wherein in step providing (440) markup language code, code is provided according to predefined symbol-to-code conversion rules.

13. An article of manufacture comprising a computer usable medium having computer readable program code means embodied therein for causing a computer to perform the method of any of claims 1-12.

14. Computer program product (100) having computer instructions that cause a design computer (900) that interacts with a designer to provide a prototype page (200) for subsequent first and second presentations (201, 202), the computer program product (100) comprising:
instructions for selecting (410) a distribution (A) of presentation areas (510, 520),
instructions for placing (420) first (521) and second (522) icon symbols for user activities (CAT, SEL) in at least one presentation area (520), wherein the user activities are related to the first and second presentations (201, 202),
instructions for placing (430) a navigation symbol (550) that graphically links the first (521) and second (522) icon symbols to indicate the subsequent presentations (201, 202),
instructions for providing (440) markup language code for the prototype page (200) with
• location indicating code corresponding to the area distribution (A),
• picture code for first (221) and second (222) pictures, the pictures corresponding to the icon symbols, the picture code being combined with the location code,
• interaction code corresponding to the navigation symbol (550) for presenting the first picture prior to the second picture.

15. The Computer program product (100) of claim 14, wherein the instructions for selecting (410) an area division cause the computer (900) to present graphical symbols of predefined area divisions (A, B, C) to the designer and to receive a selection from the designer.

16. The Computer program product (100) of claim 14, wherein the instructions for placing (420) first (521) and second (522) icon symbols cause the computer (900) to place the icon symbols into separate areas.

17. The Computer program product (100) of claim 14, wherein the instructions for placing (420) first (521) and second (522) icon symbols cause the computer (900) to place the icon symbols into a common area.

18. The Computer program product (100) of claim 14, wherein the instructions for providing (440) markup language code cause the computer (900) to provide code in HTML, XML, XHTML, WML, SGML, Java, or JavaScript.

19. Computer (900) to provide code for a prototype page (200) for subsequent first and second presentations (201, 202) by a browser on a test computer (901), the computer (900) comprising:
means for selecting (410) a distribution (A) of presentation areas (510, 520),
means for placing (420) first (521) and second (522) icon symbols for user activities (CAT, SEL) in at least one presentation area (520), wherein the user activities are related to the first and second presentations (201, 202),
means for placing (430) a navigation symbol (550) that graphically links the first (521) and second (522) icon symbols to indicate the subsequent presentations (201, 202),
means for providing (440) markup language code for the prototype page (200) with
• location indicating code corresponding to the area distribution (A),
• picture code for first (221) and second (222) pictures, the pictures corresponding to the icon symbols, the picture code being combined with the location code,
• interaction code corresponding to the navigation symbol (550) for presenting the first picture prior to the second picture.

20. The computer (900) of claim 19, wherein the means for selecting (410), placing (420) icon symbols, and placing (430) navigation symbols are implemented by computer program instructions that cause the computer (900) to interact with a designer being the user of the computer.

21. The computer (900) of claim 20, wherein the means for selecting (410) an area division presents graphical symbols of predefined area divisions (A, B, C) to the designer and receives a selection from the designer.

22. The computer (900) of claim 19, wherein the means for placing (420) first (521) and second (522) icon symbols place the icon symbols into separate areas.

23. The computer (900) of claim 19, wherein the means for placing (420) first (521) and second (522) icon symbols place the icon symbols into a common area.

24. The computer (900) of claim 19, wherein the first icon symbol (521) stands for interaction, and the navigation symbol (550) points from the first symbol (521) into the direction of the second icon symbol (522).

25. The computer (900) of claim 19, wherein the means for providing (440) markup language code provide code in HTML, XML, XHTML, WML, SGML, Java, or JavaScript.
